**Europäisches Patentamt**

**European Patent Office**

**Office européen des brevets**

(19)

(11) Numéro de publication: **0 055 681**
**B1**

(12) # FASCICULE DE BREVET EUROPEEN

(45) Date de publication du fascicule du brevet:
11.07.84

(51) Int. Cl.³: **C 01 F 7/06**

(21) Numéro de dépôt: **81420191.9**

(22) Date de dépôt: **23.12.81**

(54) **Procédé amélioré de carbochloration de l'alumine en bain de sels fondus.**

(30) Priorité: **24.12.80 FR 8027945**
**24.12.80 FR 8027946**
**17.12.81 FR 8123791**

(43) Date de publication de la demande:
**07.07.82 Bulletin 82/27**

(45) Mention de la délivrance du brevet:
**11.07.84 Bulletin 84/28**

(84) Etats contractants désignés:
**AT CH DE GB IT LI NL SE**

(56) Documents cités:
**DE - A - 830 787**
**DE - B - 1 061 757**
**FR - A - 1 069 243**
**FR - A - 2 336 349**
**GB - A - 807 116**
**LU - A - 39 124**
**US - A - 3 835 554**

(73) Titulaire: **ALUMINIUM PECHINEY, 28, rue de Bonnel, F-69433 Lyon Cedex 3 (FR)**

(72) Inventeur: **Gurtner, Bernard, 5, Boulevard Agutte Sembat, F-38000 Grenoble (FR)**
Inventeur: **Cohen, Joseph, 199, rue du Faubourg Saint Honoré, F-75008 Paris (FR)**
Inventeur: **Andrioly, Jean, Les Chazeaux, F-38560 Jarrie (FR)**

(74) Mandataire: **Gaucherand, Michel et al, PECHINEY UGINE KUHLMANN 28 rue de Bonnel, F-69433 Lyon Cedex 3 (FR)**

ACTORUM AG

## Description

L'invention concerne un procédé amélioré de formation de chlorure d'aluminium anhydre par carbochloration de l'alumine en bains de sels fondus.

Depuis longtemps déjà, il est connu de produire du chlorure d'aluminium par carbochloration d'un minerai alumineux ou bien par carbochloration de l'alumine obtenue par l'attaque d'un minerai en contenant. L'importance économique que revêt l'obtention industrielle du chlorure d'aluminium pour les applications catalytiques ou pour la production électrolytique de l'aluminium, a conduit l'homme de l'art à effectuer des recherches approfondies en ce domaine. C'est ainsi que de nombreux procédés ont été décrits dans la littérature spécialisée, qui concernent la production du chlorure d'aluminium anhydre par carbochloration de l'alumine en phase tourbillonnaire, ou en bains de sels fondus.

Le premier type de procédé, illustré par le brevet français 1 481 390 décrit la carbochloration de l'alumine avec l'obtention du chlorure d'aluminium anhydre. Selon ce procédé, le chlorure d'aluminium anhydre est obtenu par réaction avec de l'alumine en couche tourbillonnaire de chlore et de charbon à faible teneur en cendres, à des températures comprises entre 450 °C et 600 °C en utilisant le caractère exothermique de la réaction:

$$Al_2O_3 + 3/2\ C + 3\ Cl_2 \rightarrow Al_2Cl_6 + 3/2\ CO_2 + Q$$

millithermies les réactifs solides pouvant être introduits séparément ou en mélange. On peut ainsi produire, en régime continu, du chlorure d'aluminium anhydre qui est entraîné à l'état gazeux avec les gaz déchappement pour être condensé dans une zone refroide à cet effet.

Bien qu'il soit ainsi possible d'obtenir, de manière simple, du chlorure d'aluminium anhydre en un seul stade par réaction du chlore et du charbon avec de l'alumine en couche tourbillonnaire, ce procédé exige que l'on utilise un charbon à faible teneur en cendres, celle-ci ne devant pas être supérieure à 1%. De plus, pour assurer un cours correct de la réaction précitée, les granulométries de l'alumine et du charbon mis en œuvre, doivent être similaires et, de préférence, identiques, de telle sorte qu'il ne se produise pas une démixtion du lit au cours de la carbochloration.

En outre, la pratique d'un tel procédé exige l'usage d'une alumine à haute surface spécifique, en particulier de l'alumine γ, pour disposer d'une réactivité suffisante. Mais, cette alumine particulière à haute surface spécifique, est plus fortement hydratée qu'une alumine α, par exemple, et, de ce fait, est à l'origine d'une perte importante de chlore par formation d'acide chlorhydrique.

Enfin, comme l'alumine utilisée est généralement d'origine Bayer, elle est accompagnée, en tant qu'impureté de sodium sous une forme oxydée, qui se combine, lors de la réaction de carbochloration en lit fluidisé, en formant du chloroaluminate de sodium dont une fraction est entraînée par tension de vapeur avec les effluents gazeux, tandis que l'autre fraction restant dans le réacteur, provoque des agglutinations des matériaux formant le lit fluidisé et une démixtion dudit lit.

Le deuxième type de procédé, qui concerne la carbochloration de l'alumine en bains de sels fondus, illustré par le brevet français 2 334 625, consiste à mettre en contact, dans un bain de sels fondus formé d'au moins un chlorure de métal alcalin et/ou alcalino-terreux et de chlorure d'aluminium, de l'alumine avec une source de chlore en présence d'un agent réducteur non gazeux, telque le carbone, le chlorure d'aluminium anhydre étant recueilli à la sortie du bain sous une forme gazeuse.

Cependant, ce type de procédé, bien que produisant du chlorure d'aluminium anhydre d'une pureté suffisante pour la production électrolytique de l'aluminium, n'est pas assez efficace pour disposer d'un rendement en production horaire du chlorure d'aluminium qui puisse satisfaire pleinement l'homme de l'art. En effet, l'alumine est introduite dans le bain de sels fondus sous sa forme la plus habituelle, c'est-à-dire sous la forme d'une fine poudre blanche, ainsi que l'agent réducteur tel que le carbone, réduit à une dimension similaire.

Le chlore destiné à la carbochloration de l'alumine est alors insufflé en continu en proportion stoechiométrique, dans le bain de sels fondus dans lequel on été immergés des diffuseurs gazeux, de types connus, tels que, par exemple, des anneaux de quartz, ces diffuseurs provoquant la formation d'un très grand nombre de bulles gazeuses de très petites dimensions qui entrent en contact avec les grains élémentaires d'alumine et de carbone en suspension dans le bain soumis à une agitation. Malgré la présence de ces diffuseurs pour la phase gazeuse, une fraction seulement du chlore introduit dans le bain pourrait réagir avec l'alumine et le carbone, tandis que l'autre fraction serait évacuée de l'enceinte de carbochloration avec le chlorure d'aluminium vaporisé, si l'on n'utilisait pas des solutions coûteuses, telles que, par exemple, celle qui consisterait à pratiquer une agitation forcée dans un milieu à haute température et particulièrement agressif, tout en respectant des conditions d'étanchéité difficilement compatibles avec les impératifs d'une production industrielle: sécurité, fiabilité, manteinance.

En dehors des difficultés précitées, ce manque de contact intime entre les matériaux solides, liquides et gazeux, serait à l'origine d'une production horaire de chlorure d'aluminium anhydre par mètre cube de bain relativement faible, malgré toutes les tentatives faites jusqu'à ce jour.

Consciente de l'intérêt que peut offrir à l'homme de l'art un procédé d'obtention de chlorure d'aluminium par carbochloration de l'alumine en bains de sels fondus, mais consciente également des inconvénients attachés aux procédés décrits antérieurement dans la littérature spécialisée, la demanderesse, poursuivant ses recherches, a trouvé et mis au point un procédé perfectionné de carbochloration de l'alumine, dont la production horaire est très améliorée, sans qu'il soit nécessaire d'avoir recours à des solutions complexes et coûteuses.

Selon l'invention, le procédé de production de chlorure d'aluminium par carbochloration, qui consiste à mettre en contact une source d'alumine constituée par des agglomérats confectionnés par agglutination et un agent de chloration en présence d'un agent réducteur dans un bain de sels fondus contenant au moins un halogénure alcalin et/ou alcalinoterreux, se caractérise par le fait que le garnissage dudit bain est constitué par lesdits agglomérats dans le but d'assurer un contact très intime entre les phases gazeuses, liquides et solides en présence lors de la réaction le volume total occupé par les agglomérats et le bain de sels fondus étant au plus égal à deux fois le volume apparent occupé, par les agglomérats seuls pour une même section de réacteur de carbochloration.

Le bain de sels fondus, dont les compositions ont été très largement divulguées par la littérature spécialisée, se compose en général d'un mélange d'au moins un halogénure alcalin et/ou alcalinoterreux avec du chlorure d'aluminium. Parmi les halogénures qui peuvent être introduits, il a été remarqué comme souhaitable d'utiliser les chlorures de métaux alcalins et/ou alcalinoterreux, de préférence les chlorures de lithium, de sodium, de potassium, ainsi que les chlorures de calcium, de baryum et de magnésium.

Le bain de sels fondus comprend également dans sa masse fondue de 2 à 60%, mais, de préférence, entre 10% et 50% en masse molaire de chlorure d'aluminium anhydre.

La température du bain de sels fondus destiné à la carbochloration selon l'invention, se situe entre son point de fusion et son point d'ébullition dans les conditions d'utilisation. La demanderesse a constaté que l'intervalle de températures pratiquées se situait entre 450 °C et 900 °C, mais que la zone de température préférentielle se situait entre 600 °C et 800 °C.

L'agent chloré utilisé dans le cadre de l'invention est généralement le chlore gazeux. Cependant, d'autres sources chlorées peuvent être également utilisées telles que, par exemple, $CCl_4$, $C_2Cl_6$, etc . . . ou leurs mélanges. L'agent chloré est introduit dans le milieu réactionnel en une quantité au moins stoechiométrique par rapport à l'alumine à carbochlorer introduite dans le bain.

L'agent réducteur employé dans le cadre de la carbochloration peut l'être sous une forme gazeuse ou solide et selon une quantité au moins stoechiométrique par rapport à l'alumine à carbochlorer introduite dans le bain.

Quand l'agent réducteur est sous une forme gazeuse, il est constitué par de l'oxyde de carbone ou du dioxalène ($C_2O_3$). Dans ce cas, le chlorure d'aluminium anhydre obtenu est particulièrement pur, et peut être utilisé dans le domaine de la catalyse par exemple, car il est bien connu que le chlorure d'aluminium obtenu par la carbochloration de l'alumine sous une haute température, par l'action simultanée de gaz de chlore et d'un agent réducteur tel que le carbone (coke, charbon de bois . . .) contient une certaine quantité de composés organiques polychlorés tels que l'hexachlorobenzène, hexachloréthane, le décachlorobiphényle, etc . . ., qui se forment lors de la réaction de carbochloration de l'alumine, et qui peut atteindre une teneur pondérale importante, allant jusqu'à 1% à 5% de la teneur en $AlCl_3$. De tels composés organiques peuvent être d'une grande gêne dans le domaine de la catalyse des synthèses organiques et sont d'autant plus gênants qu'ils possèdent des propriétés physiques relativement voisines de celles du chlorure d'aluminium anhydre en particulier, quand il s'agit de l'hexachlorobenzène et qu'ils sont très difficilement séparables du chlorure d'aluminium par les moyens connus de l'homme de l'art, tel que par exemple la sublimation.

Quand l'agent réducteur est sous une forme solide, cet agent est préférentiellement du carbone, mais peut être éventuellement choisi parmi d'autres réducteurs bien connus. Quand le réducteur est le carbone, il provient des sources habituelles bien connues de l'homme de l'art, c'est-à-dire les charbons, le pétrole et leurs dérivés. Cet agent réducteur est mis en œuvre après avoir éventuellement subi un traitement de purification ainsi qu'un traitement de broyage, de telle manière qu'il se présente sous l'aspect de particules solides de faibles dimensions, comprises par exemple entre 0,2 et 200 mm mais, de préférence, entre 0,5 et 8 mm.

Comme celà a déjà été exprimé, la source d'alumine destinée à la carbochloration est introduite dans le bain de sels fondus, sous une forme élaborée d'agglomérats confectionnés par agglutination.

En effet, lors des nombreuses expériences l'ayant conduit à l'objet de l'invention, la demanderesse a constaté que l'introduction, dans le bain de sels fondus, de l'alumine sous sa forme la plus habituelle, c'est-à-dire sous la forme d'une fine poudre blanche, nécessitait l'usage de diffuseurs gazeux de type connu immergés dans ledit bain, tels que, par exemple, des anneaux de quartz, pour la mélange gazeux de chloration insufflé en continu dans le milieu de carbochloration, ces diffuseurs provoquant la formation d'un très grand nombre de bulles gazeuses de très petites dimensions qui entrent en contact avec les grains élémentaires d'alumine et de carbone en suspension dans le bain soumis à agitation.

En l'absence de solutions techniques complexes et/ou coûteuses, telles que, par exemple, une agitation forcée ou une augmentation conséquente de la hauteur du bain, la seule présence des diffuseurs gazeux est insuffisante pour assurer une production horaire acceptable de chlorure d'aluminium.

Le manque de contact intime entre la fraction gazeuse insufflée, formée par exemple de chlore ou de chlore et d'oxyde de carbon, la fraction liquide de sels fondus et la fraction solide constituée d'alumine ou du mélange d'alumine et de carbone, a conduit la demanderesse à constater que le rendement réactionnel entre l'alumine, l'agent réducteur et l'agent de chloration, est très fortement amélioré, même en l'absence des diffuseurs gazeux précités, quand la source d'alumine est introduite dans le bain de sels fondus sous la forme élaborée d'agglomérats confectionnés par agglutination.

Dans ce cas, les agglomérats d'alumine, constituant le garnissage du bain de sels fondus diffusant les agents gazeux introduits, sont mis en œuvre de façon à former un garnissage contenant intégralement le bain de sels fondus, c'est-à-dire que le volume total occupé par les agglomérats d'alumine et le bain de sels fondus est égal au volume apparent occupé par les agglomérats seuls pour une même section de réacteur.

Mais, il est également possible d'obtenir des productions horaires équivalentes de chlorure d'aluminium anhydre même quand le garnissage du bain de sels fondus constitué par les agglomérats, contient seulement une fraction dudit bain, et non plus son intégralité, c'est-à-dire que, pour une même section de réacteur de carbochloration, la demanderesse a constaté que le volume total occupé par les agglomérats d'alumine et le bain de sels fondus peut être supérieur au volume apparent occupé par les agglomérats seuls, mais au plus deux fois le volume apparent occupé par ces agglomérats seuls, et est, de préférence, au plus de 1,5 fois ce même volume apparent.

L'alumine, destinée à être agglomérée en vue de la carbochloration selon l'invention, est généralement de l'hydrargillite ou de la boehmite, alumines hydratées découlant de l'attaque alcaline de la bauxite. Mais, elle peut provenir également de la décomposition du chlorure d'aluminium hexahydraté, des sulfates, des sulfites ou de nitrates d'aluminium hydratés, résultant de l'attaque acide de minerais silico-alumineux. De même, les alumines diverses correspondant à des transformations de phases, telles que l'alumine amorphe ou cristalline, par exemple sous la forme alpha, gamma, delta, theta, iota, eta, chi et kappa, peuvent être agglomérées et subissent avec succès la carbochloration selon l'invention. Outre ces diverses origines, la demanderesse a également constaté que la surface spécifique, que présentent ces diverses formes d'alumine, n'a aucune influence néfaste sur la carbochloration de l'alumine agglomérée. En d'autres termes, la carbochloration d'agglomérats d'alumines offrant une surface spécifique de $2 m^2/g$ s'effectue avec d'aussi bons résultats que ceux obtenus lors de la carbochloration d'agglomérats d'alumine à $160 m^2/g$. Ainsi, la carbochloration offre pratiquement la même efficacité, non seulement avec divers types d'alumine, mais également avec un mélange de ces divers types d'alumines.

Les agglomérats d'alumine, destinés à être soumis à la carbochloration selon l'invention, sont généralement préparés par les procédés connus de l'homme de l'art.

Ainsi, quand est pratiquée l'agglomération d'une alumine amorphe, le procédé consiste comme décrit le brevet français n° 1 190 094, à agglomérer avec de l'eau une poudre sèche d'un mélange intime de trihydrate d'aluminium et d'aluminate de soude, ou bien à utiliser le mélange obtenu par séchage d'un gâteau de trihydrate non lavé, à une température comprise entre 80 °C et 150 °C et à broyer ledit gâteau après séchage. La poudre sèche du mélange alumine-aluminate de sodium est introduite dans un granulateur, en même temps qu'une quantité adéquate d'eau. Les granulés obtenus ont un diamètre compris, par exemple, entre 4 et 6 mm, et sont soumis à un traitement thermique. Mais, quand est pratiquée l'agglomération d'une alumine provenant de la décomposition de chlorure d'aluminium hexahydraté, se sulfates, de nitrates, de sulfites d'aluminium hydratés, cette agglomération peut être réalisée par exemple selon le procédé décrit dans la demande de brevet FR-A-2 359 094, qui consiste à compacter un «produit intermédiaire» provenant de la décomposition incomplète d'un des sels d'aluminium hydraté à granuler le produit compacté et à le traiter thermiquement.

Toutefois, la demanderesse a constaté que les agglomérats se prêtant le mieux à la carbochloration en bain de sels fondus en procurant un rendement horaire élevé de chlorure d'aluminium, sont ceux de formes compactes sensiblement sphériques ou cylindriques obtenus selon le procédé décrit dans le brevet français n° 1 077 163. Ce procédé consiste, d'abord à déshydrater une alumine hydratée, à une température comprise entre 150 °C et 600 °C, dans des conditions telles que la vapeur d'eau est é liminée au fur et à mesurer de son dégagement, puis à broyer le produit déshydraté afin d'obtenir la granulométrie la plus favorable au mode d'agglomération envisagé, ensuite, à former les granulés par pressage, filage ou granulation au drageoir, en utilisant comme liant de l'eau dans laquelle de l'acide fluorhydrique et/ou un ou plusieurs sels métalliques peuvent être éventuellement en solution, à durcir les agglomérats en les maintenant en atmosphère humide, à élever la température du milieu pour accélérer le durcissement sans pour autant dépasser la température de 150 °C, enfin, à soumettre à un traitement thermique les agglomérats ainsi obtenus, suivant l'usage auquel on les destine.

Mais, la demanderesse a constaté acec intérêt qu'il était possible d'alimenter le bain de sels fondus au moyen d'agglomérats mixtes formés d'un mélange d'alumine et de l'agent réducteur, tel que le carbone ou ses dérivés.

Enfin, l'alumine peut être introduite dans le bain de sels fondus sous la forme, également élaborée, de barres d'alumine réalisées selon les techniques connues, à partir d'agglomérats d'alumine ou d'agglomérats mixtes de carbone et d'alumine, liés, par exemple, au moyen d'un agent cokéfié ou au moyen de sels entrant dans la composition du bain de carbochloration, lesdites barres ayant la propriété de se désagréger dans le bain de sels fondus en libérant les agglomérats d'alumine.

La plus grande dimension des agglomérats d'alumine ou des agglomérats mixtes d'alumine et d'agent réducteur est souhaitablement comprise entre 0,2 et 200 mm, mais de préférence, entre 0,5 et 8 mm.

En pratique, il est souhaitable que les agglomérats d'alumine seule ou d'alumine et de carbone et de ses dérivés soient bien déshydratés et déshydrogénés selon les procédés de calcination connus, pour éviter, lors de la carbochloration, la formation d'acide chlorhydrique gazeux, au détriment de la carbochloration elle-même, qui consommerait une fraction de l'agent chloré introduit dans le milieu réactionnel.

Comme le garnissage du bain constitué par les agglomérats est consommable, il est nécessaire d'assurer une alimentation régulière du milieu réactionnel en agglomérats, de telle manière qu'ils soient non seulement source d'alumine à carbochlorer, mais aussi maintien du garnissage afin que le volume total occupé par les agglomérats d'alumine et le bain de sels fondus soit au plus deux fois le volume apparent occupé par les agglomérats seuls et, de préférence, au plus de 1,5 fois ce même volume apparent.

Enfin, la carbochloration de l'alumine peut être effectuée sous pression de gaz réactionnels, permettant ainsi une meilleure diffusion du mélange gazeux dans le bain de sels fondus. Un tel procédé de carbochloration sous pression permet d'augmenter le rendement de transformation de l'alumine en chlorure d'aluminium.

Le bain de carbochloration s'enrichissant en $AlCl_3$, celui-ci est vaporisé dès que la composition du bain le permet. Il est alors entraîné par les effluents gazeux. Le chlorure d'aluminium est séparé de cette fraction gazeuse par tout moyen approprié et connu de l'homme de l'art, tel que par exemple, par condensation de la vapeur du chlorure d'aluminium dans une chambre de condensation.

Exemple 1

Cet exemple, qui illustre l'art antérieur, consiste à alimenter le bain de sels fondus, avec une alumine sous forme de poudre. Il illustre également l'amélioration de la qualité du chlorure d'aluminium produit quand l'agent réducteur utilisé est sous une forme gazeuse plutôt que sous une forme solide.

On a préparé un bain de sels constitué par un mélange de chlorure de sodium et chlorure d'aluminium, ayant la composition suivante exprimée en % de masse molaire:

| | |
|---|---|
| Chlorure de sodium | 50% |
| Chlorure d'aluminium | 50% |

Ce bain a été soumis à un chauffage externe afin de provoquer la fusion du mélange de sels, puis il été introduit dans un réacteur de laboratoire approprié préalablement garni d'anneaux de quartz, de diamètre externe 6 millimètres, de telle façon que ce garnissage contienne intégralement le bain liquide introduit. La hauteur totale du bain garni était de 2,5 mètres environ. La température du bain était maintenue à 650 °C.

On a ajouté de l'alumine à l'état de fine poudre présentant une surface spécifique de 77 $m^2$/g, à raison de 128 g par litre de bain de sels fondus, que l'on a dispersée par agitation jusqu'à former une suspension avec le bain.

Puis, on a insufflé dans le bain de sels fondus un mélange gazeux de CO et $Cl_2$, de composition stoechiométrique, à raison de 1,36 normaux litres par heure et par gramme d'alumine introduite, au moyen d'un diffuseur de gaz permettant le contact intime au sein du bain agité, entre les grains d'alumine et les gaz de carbochloration dispersés au sein du bain de sels fondus. L'alumine consommée était remplacée au fur et à mesure.

Après que le bain de sels fondus ait été saturé en chlorure d'aluminium, le produit ainsi formé se vaporisait, était entraîné par les effluents gazeux et était recueilli dans une chambre de condensation à raison de 105 g/h par litre de bain réel de sels fondus. Dans ces conditions, le rendement de carbochloration a dépassé 95%.

L'analyse du chlorure d'aluminium ainsi produit, a permis de constater que celui-ci était pratiquement exempt de produits organiques polychlorés tels que l'hexachlorobenzène, l'hexachloréthane et le décachlorobiphényle.

On a trouvé dans le chlorure d'aluminium ainsi produit:

| | |
|---|---|
| Hexachloréthane | 40 ppm |
| Hexachlorobenzène: | 10 ppm |
| Décachlorobiphényle: | 2 ppm |

En vue de comparer l'usage de l'oxyde de carbone et du carbone solide, on a réalisé la préparation de chlorure d'aluminium anhydre par carbochloration en bains de sels fondus, l'élément réducteur étant le carbone, toutes les autres conditions étant égales par ailleurs.

Le chlorure d'aluminium produit contenait:

| | |
|---|---|
| Hexachloréthane: | 100 ppm |
| Hexachlorobenzène: | 2500 ppm |
| Décachlorobiphényle: | 300 ppm |

Exemple 2

Cet exemple illustre l'objet de l'invention. Pour ce faire, on a préparé, comme dans l'exemple 1, un bain de sels constitué par un mélange de chlorure de sodium et de chlorure d'aluminium selon les proportions précédemment indiquées, qui a été soumis à la fusion de ses composants et introduit dans le réacteur de l'exemple 1, préalablement garni d'agglomérats d'alumine, dont la plus grande dimension était comprise entre 2 et 5 millimètres, de telle façon que ces agglomérats constituent le garnissage du réacteur et que le volume total occupé par les agglomérats d'alumine et le bain de sels fondus soit le même que le volume apparent occupé par les agglomérats seuls pour une même section de réacteur. La hauteur totale du bain garni était de 2,5 mètres environ.

La température du bain était alors maintenue à 650 °C. Puis, on a insufflé dans le bain de sels fondus un mélange gazeux de CO et $Cl_2$ de composition stoechiométrique à raison de 1,36 normaux litre par heure et par gramme d'alumine introduite, et on a ajouté 51 g d'agglomérats d'alumine par heure et par litre de bain réel de sels fondus.

Après que le bain de sels fondus ait été saturé en chlorure d'aluminium le produit formé se vaporisait, était entraîné par les effluents gazeux et était recueilli dans une chambre de condensation à raison de 132 g/h, par litre de bain réel de sels fondus.

L'analyse du chlorure d'aluminium ainsi produit a permis de constater que celui-ci était pratiquement exempt de produits organiques polychlorés tels que l'hexachlorobenzène, l'hexachloréthane et le décachlorobiphényle.

En outre, l'introduction de l'alumine sous la forme d'agglomérats, dont la plus grande dimension des grains était comprise entre 2 mm et 5 mm, a permis d'améliorer la production horaire de 25% par litre de réacteur.

Exemple 3

En pratiquant les mêmes conditions que dans les exemples 1 et 2, cet exemple illustre l'influence bénéfique de la pression, établie dans l'enceinte où s'effectue la carbochloration, sur les rendements de transformation de l'alumine en chlorure d'aluminium.

Pour ce faire, la demanderesse a effectué dans le réacteur de laboratoire précité, des essais en fonction de la pression régnant à l'intérieur dudit réacteur:

– pour des alumines sous forme poudreuse et sous forme d'agglomérats,

– pour un débit de gaz de carbochloration de 1,36 normaux litre par heure et par gramme d'alumine introduite.

Les augmentations en pourcentage de la production horaire par litre de réacteur ont été déterminées pour chacun des essais de carbochloration de l'alumine, en utilisant des bains de sels fondus de même composition, portés à la même température de carbochloration et recevant une quantité d'$Al_2O_3$ ajustée à cette production.

Les résultats expérimentaux ont été réunis dans le tableau I ci-après:

Tableau I

| | Matériaux utilisés | Pression absolue en kg/cm² dans l'enceinte de carbochloration | | |
|---|---|---|---|---|
| | | 1,0 | 2,0 | 2,5 |
| % d'augmentation de la production par litre de réacteur | $Al_2O_3$ poudre | Base 100 | 158 | 176 |
| | $Al_2O_3$ aggloméré | 125 | 182 | 212 |

Ainsi, le tableau révèle l'importance de la pression des gaz de carbochloration dans l'enceinte par l'augmentation importante des pourcentages de la production horaire de $AlCl_3$ par litre de réacteur.

Exemple 4

On a préparé un bain de sels constitué par un mélange de chlorure de sodium et de chlorure d'aluminium ayant la composition suivante, exprimée en pour cent de masse molaire:

Chlorure de sodium 50%
Chlorure d'aluminium 50%

Ce bain a été soumis à un chauffage externe afin de provoquer la fusion du mélange de sels, puis il a été introduit dans un réacteur de laboratoire approprié, préalablement garni d'agglomérats d'alumine, de forme sphérique et des agglomérats de carbone, dont les plus grandes dimensions étaient comprises entre 2 et 5 mm, de telle façon que ces agglomérats constituent le garnissage du réacteur et que le volume total occupé par les agglomérats d'alumine de carbone et le bain de sels fondus soit le même que le volume apparent occupé par les agglomérats seuls pour une même section de réacteur.

La hauteur totale du bain garni était de 1,2 m environ. La température du bain était maintenue à 650 °C.

Puis, on a insufflé dans le bain de sels fondus du chlore gazeux à raison de 65 normaux litres par heure et par litre de bain réel de sels fondus. Le carbone et l'alumine consommés étaient remplacés au fur et à mesure. Après que le bain de sels fondus ait été saturé en chlorure d'aluminium, le produit ainsi formé se vaporisait, était entraîné par les effluents gazeux et était recueilli dans une chambre de condensation à raison de 260 g/h et par litre de bain réel de sels fondus. En vue de comparer ce procédé avec l'art antérieur, on a réalisé la préparation de chlorure d'aluminium anhydre par carbochloration en bains de sels fondus, l'alumine et le carbone étant introduits sous la forme d'une fine poudre de granulométrie comprise entre 10 et 200 µm, tandis que toutes les autres conditions étaient égales, par ailleurs, hormis le fait que le réacteur était garni d'anneaux de quartz de diamètre externe de 6 mm. La production de chlorure d'aluminium n'était que de 163 g/par heure et par litre de bains réel.

Exemple 5

On a préparé, comme dans l'exemple 1, un bain de sels constitué par un mélange de chlorure de sodium et de chlorure d'aluminium selon les proportions précédemment indiquées, qui a été soumis à la fusion de ses composants.

Puis, l'on a introduit dans le réacteur de l'exemple 1, des agglomérats mixtes d'alumine et de carbone, de forme sensiblement cylindrique, obtenus par cokéfaction d'une pâte réalisée par malaxage de brai de houille et d'alumine à la température de 160 °C. Cette pâte a ensuite été thermiquement traitée à la température de 900 °C pour lui conférer une bonne réactivité. Ces agglomérats comportaient en poids 46% d'$Al_2O_3$ et 54% de C, dont la plus grande dimension était comprise entre 3 mm et 7 mm. Ces agglomérats constituaient le garnissage du réacteur de telle façon que le volume total occupé par les agglomérats mixtes d'alumine et de carbone et le bain de sels fondus soit le même que le volume apparent occupé par les agglomérats seuls pour une même section de réacteur.

La hauteur totale du bain garni était de 1,2 m environ. Puis, l'on a ajouté 1450 g d'agglomérats mixtes d'alumine et de carbone par litre de bain réel de sels fondus. La température du bain était alors maintenue à 650 °C.

Enfin, on a insufflé dans le bain de sels fondus le chlore à raison de 62 normaux litres par heure et par litre de bain réel de sels fondus. L'alumine et le carbone étaient remplacés au fur et à mesure. Après que le bain de sels fondus ait été saturé en chlorure d'aluminium, le produit formé se vaporisait, était entraîné par les effluents gazeux et était recueilli dans une chambre de condensation à raison de 245 g par heure et par litre de bain réel.

Exemple 6

On a préparé un bain de sels constitué par un mélange de chlorure de sodium et de chlorure d'aluminium ayant la composition suivante, exprimée en pour cent de masse molaire:

| | |
|---|---|
| Chlorure de sodium | 50% |
| Chlorure d'aluminium | 50% |

Ce bain a été soumis à un chauffage externe afin de provoquer la fusion du mélange de sels, puis il a été introduit dans un réacteur de laboratoire approprié, préalablement garni d'agglomérats mixtes d'alumine et carbone.

Ces agglomérats, de forme sensiblement cylindrique, ont été obtenus par cokéfaction d'une pâte réalisée par malaxage de brai de houille et d'alumine, à la température de 160 °C. Cette pâte a ensuite été thermiquement traitée à la température de 900 °C pour lui conférer une bonne réactivité, Ces agglomérats comportent en poids 46% d'$Al_2O_3$ et 54% de C. Leur plus grande dimension était comprise entre 3 mm et 7 mm.

La hauteur totale du bain garni était de 1,2 m et la température du bain était de 650 °C.

Trois essais ont été effectués dans les conditions précitées, dont les volumes totaux occupés simultanément par les agglomérats mixtes d'alumine et de carbone et le bain de sels fondus, pour une même section de réacteur, sont définis ci-après:

Essai 1: volume total égal au volume apparent occupé par les agglomérats sels

Essai 2: volume total égal à 1,2 fois le volume apparent occupé par les agglomérats seuls.

Essai 3: volume total égal à 1,5 fois le volume apparent occupé par les agglomérats seuls.

Enfin, on a insufflé dans le bain de sels fondus le chlore à raison de 62 normaux litres par heure et par litre de bain réel de sels fondus.

L'alumine et le carbone consommés étaient remplacés au fur et à mesure.

Après que le bain de sels fondus ait été saturé en chlorure d'aluminium, le produit formé se vaporisait, était entraîné par les effluents gazeux et était recueilli dans une chambre de condensation.

Les quantités de chlorure d'aluminium produites par heure et par litre de réacteur pour chaque essai ont été consignées dans le tableau ci-après, en fixant une base arbitraire de 100 pour l'essai 1, les résultats des essais 2 et 3 étant exprimés comparativement à cette base:

| | Essai | | |
|---|---|---|---|
| | 1 | 2 | 3 |
| Production horaire de $AlCl_3$ par litre de réacteur | Base 100 | 96 | 89 |

Ainsi, ce tableau révèle la possibilité de diminuer le volume d'agglomérats jouant le rôle de garnissage en conservant des productions horaires de $AlCl_3$ satisfaisantes, ce qui permet, dans le cas d'un procédé continu de carbochloration, d'assurer une circulation du bain sans entraînement des agglomérats, grâce à la présence d'une zone de bain, ou d'une réserve, démunie de garnissage.

Exemple 7

On a préparé un bain de sels constitué par un mélange de chlorure de sodium et chlorure d'aluminium, ayant la composition suivante exprimée en % de masse molaire:

| | |
|---|---|
| Chlorure de sodium | 50% |
| Chlorure d'aluminium | 50% |

Ce bain a été soumis à un chauffage externe afin de provoquer la fusion du mélange de sels, puis il a été introduit dans un réacteur de laboratoire approprié préalablement garni d'agglomérats d'alumine, dont la plus grande dimension était comprise entre 2 et 5 mm. Ces agglomérats, de forme sensiblement sphérique, ont été préparés selon les techniques connues de l'homme de l'art.

La hauteur totale du bain garni était de 2,5 m environ.

Puis, on a ajouté 51 g d'agglomérats d'alumine par heure et par litre de bain réel de sels fondus.

La température du bain était alors maintenue à 650 °C.

Enfin, on a insufflé dans le bain de sels fondus un mélange gazeux de CO et $Cl_2$ de composition stoechiométrique à raison de 1,36 normaux litres par heure et par gramme d'alumine introduite. L'alumine consomée était remplacée au fur et à mesure.

Trois essais ont été effectués dans les conditions précitées dont les volumes totaux occupés simultanément par les agglomérats d'alumine et le bain de sels fondus pour une même section de réacteur, sont définis ci-après:

Essai 4: volume total égal au volume apparent occupé par les agglomérats seuls;

Essai 5: volume total égal à 1,2 fois le volume apparent occupé par les agglomérats seuls.

Essai 6: volume total égal à 1,5 fois le volume apparent occupé par les agglomérats seuls.

Après que le bain de sels fondus ait été saturé en chlorure d'alumine, le produit formé se vaporisait, était entraîné par les effluents gazeux et était recueilli dans une chambre de condensation.

Les quantités de chlorure d'aluminium produites par heure et par litre de réacteur pour chaque essai, ont été consignées dans le tableau ci-après en fixant une base abitraire de 100 pour l'essai 4, les résultats des essais 5 et 6 étant exprimés comparativement à cette base.

| | Essai | | |
| | 4 | 5 | 6 |
|---|---|---|---|
| Production horaire par litre de réacteur | Base 100 | 91 | 82 |

Ainsi, le tableau révèle, à son tour, la possibilité de diminuer le volume d'agglomérats jouant le rôle de garnissage du bain, en donnant des productions horaires de $AlCl_3$ encore acceptables.

**Revendications**

1. Procédé de production par carbochloration de chlorure d'aluminium anhydre consistant à mettre en contact une source d'alumine constituée par des agglomérats confectionnés par agglutination et un agent de chloration en présence d'un agent réducteur dans un bain de sels fondus contenant au moins un halogénure alcalin et/ou alcalinoterreux, caractérisé en ce que, dans le but de provoquer un contact intime entre les phase gazeuse, liquide et solide, on constitue un garnissage du bain de sels fondus au moyen desdits agglomérats dans lequel le volume total occupé par les agglomérats d'alumine et le bain de sels fondus est au plus égal à deux fois le volume apparent occupé par les agglomérats seuls pour une même section de réacteur de carbochloration.

2. Procédé de production par carbochloration de chlorure d'aluminium anhydre selon la revendication 1, caractérisé en ce que le volume total occupé par les agglomérats d'alumine et le bain de sels fondus est égal au volume apparent occupé par les agglomérats seuls pour une même section de réacteur de carbochloration.

3. Procédé de production par carbochloration de chlorure d'aluminium anhydre selon la revendication 1, caractérisé en ce que le volume total occupé par les agglomérats d'alumine et le bain de sels fondus est au plus égal à 1,5 fois le volume apparent occupé par les agglomérats seuls pour une même section de réacteur de carbochloration.

4. Procédé de production par carbochloration de chlorure d'aluminium anhydre selon l'une quelconque des revendications 1 à 3, caractérisé en ce que les agglomérats d'alumine anhydre ont leur plus grande dimension comprise entre 0,2 et 200 mm et, de préférence, entre 0,5 et 8 mm.

5. Procédé de production par carbochloration de chlorure d'aluminium anhydre, selon l'une quelconque des revendications 1 à 4, caractérisé en ce que les agglomérats d'alumine anhydre sont le forme sensiblement sphérique ou cylindrique.

6. Procédé de production par carbochloration de chlorure d'aluminium anhydre selon l'une quelconque des revendications 1 à 5, caractérisé en ce que la source d'alumine introduite dans le bain de sels fondus se présente sous la forme de barres se désagrégeant dans ledit bain, barres réalisées à partir d'agglomérats d'alumine liés entre eux par un agent cokéfié ou au moyen de sels entrant dans la composition du bain de carbochloration.

7. Procédé de production par carbochloration de chlorure d'aluminium anhydre selon l'une quelconque des revendications 1 à 6, caractérisé en ce que les agglomérats d'alumine sont obtenus par agglomération mixte de poudres d'alumine et d'agent réducteur.

8. Procédé de production par carbochloration de chlorure d'aluminium anhydre selon l'une quelconque des revendications 1 à 7, caractérisé en ce que le bain de sels fondus comprend dans sa masse, en dehors de l'halogénure alcalin, de 2 à 60 %, mais de préférence, de 10 à 50 % en masse molaire de chlorure d'aluminium anhydre.

9. Procédé de production par carbochloration de chlorure d'aluminium anhydre selon l'une quelconque des revendications 1 à 8. caractérisé en ce que l'agent de chloration est introduit dans le bain de sels fondus en proportion stoechiométrique par rapport à l'alumine introduite à carbochlorer.

10. Procédé de production par carbochloration de chlorure d'aluminium anhydre, selon l'une quelconque des revendications 1 à 9, caractérisé en ce que l'agent de chloration est le chlore gazeux, le $CCl_4$, le $C_2Cl_6$, ou un mélange de ces agents.

11. Procédé de production par carbochloration de chlorure d'aluminium anhydre, selon l'une quelconque des revendications 1 à 10, caractérisé en ce que l'agent réducteur appartient au groupe constitué par le carbone, l'oxyde de carbone et le dioxalène.

12. Procédé de production par carbochloration de chlorure d'aluminium anhydre, selon l'une quelconque des revendications 1 à 11, caractérisé en ce que la carbochloration est effectuée sous pression des gaz réactionnels.

13. Procédé de production par carbochloration de chlorure d'aluminium anhydre, selon l'une quelconque des revendications 1 à 12, caractérisé en ce que l'halogénure alcalin et/ou alcalinoterreux appartient au groupe constitué par les chlorures de lithium, sodium, potassium, calcium, baryum et magnésium.

14. Procédé de production par carbochloration de chlorure d'aluminium anhydre, selon l'une quelconque des revendications 1 à 13, caractérisé en ce que la température de carbochloration se situe dans l'intervalle de 450 °C à 900 °C mis, de préférence entre 600 °C et 800 °C.

**Patentansprüche**

1. Verfahren zur Erzeugung von wasserfreiem Aluminiumchlorid, das darin besteht, eine aus durch Verkleben vorbehandelten Agglomeraten bestehende Aluminiumoxidquelle und ein Chlorierungsmittel in Gegenwart eines Reduktionsmittels in einem wenigstens ein Alkali- und/oder Erdalkalihalogenid enthaltenden Bad geschmolzener Salze in Kontakt zu bringen, dadurch gekennzeichnet, dass man zwecks Hervorrufung eines innigen Kontaktes zwischen den gasförmigen, flüssigen und festen Phasen eine Auskleidung des Bades geschmolzener alze mittels dieser Agglomerate bildet, in der das gesamte von den Aluminiumoxidagglomeraten und dem Bad geschmolzener Salze eingenommene Volumen höchstens gleich dem Zweifachen des von den Agglomeraten allein für einen gleichen Carbochlorierungsreaktorquerschnitt eingenommenen scheinbaren Volumens ist.

2. Verfahren zur Erzeugung von wasserfreiem Aluminiumchlorid durch Carbochlorierung nach dem Anspruch 1, dadurch gekennzeichnet, dass das gesamte von den Aluminiumoxidagglomeraten und dem Bad geschmolzener Salze eingenommene Volumen gleich dem von den Agglomeraten allein für einen gleichen Carbochlorierungsreaktorquerschnitt eingenommenen scheinbaren Volumen ist.

3. Verfahren zur Erzeugung von wasserfreiem Aluminiumchlorid durch Carbochlorierung nach dem Anspruch 1, dadurch gekennzeichnet, dass das gesamte von den Aluminiumoxidagglomeraten und dem Bad geschmolzener Salze eingenommene Volumen gleich dem 1,5-fachen des von den Agglomeraten allein für einen gleichen Carbochlorierungsreaktorquerschnitt eingenommenen scheinbaren Volumens ist.

4. Verfahren zur Erzeugung von wasserfreiem Aluminiumchlorid durch Carbochlorierung nach irgendeinem der Ansprüche 1 bis 3, dadurch gekennzeichnet, dass die Agglomerate von wasserfreiem Aluminiumoxid ihre grösste Abmessung im Bereich von 0,2 bis 200 mm und vorzugsweise von 0,5 bis 8 mm haben.

5. Verfahren zur Erzeugung von wasserfreiem Aluminiumchlorid durch Carbochlorierung nach irgendeinem der Ansprüche 1 bis 4, dadurch gekennzeichnet, dass die Agglomerate von wasserfreiem Aluminiumoxid von im wesentlichen kugeliger oder zylindrischer Form sind.

6. Verfahren zur Erzeugung von wasserfreiem Aluminiumchlorid durch Carbochlorierung nach irgendeinem der Ansprüche 1 bis 5, dadurch gekennzeichnet, dass die in das Bad geschmolzener Salze eingeführte Aluminiumoxidquelle die Form von sich in diesem Bad zersetzenden Stangen hat, die aus Aluminiumoxidagglomeraten hergestellt sind, die untereinander durch ein verkoktes Mittel oder mit Hilfe von in die Zusammensetzung des Carbochlorierungsbades eingehenden Salzen verbunden sind.

7. Verfahren zur Erzeugung von wasserfreiem Aluminiumchlorid durch Carbochlorierung nach irgendeinem der Ansprüche 1 bis 6, dadurch gekennzeichnet, dass die Aluminiumoxidagglomerate durch gemischte Agglomerierung von Aluminiumoxidpulver und Reduktionsmittel erhalten werden.

8. Verfahren zur Erzeugung von wasserfreiem Aluminiumchlorid durch Carbochlorierung nach irgendeinem der Ansprüche 1 bis 7, dadurch gekennzeichnet, dass das Bad geschmolzener Salze in seiner Masse ausser dem Alkalihalogenid 2 bis 60, aber vorzugsweise 10 bis 50 Molprozent wasserfreies Aluminiumchlorid aufweist.

9. Verfahren zur Erzeugung von wasserfreiem Aluminiumchlorid durch Carbochlorierung nach irgendeinem der Ansprüche 1 bis 8, dadurch gekennzeichnet, dass das Chlorierungsmittel in das Bad geschmolzener Salze in stöchiometrischem Verhältnis bezüglich des zu carbochlorierenden eingeführten Aluminiumoxids eingeführt wird.

10. Verfahren zur Erzeugung von wasserfreiem Aluminiumchlorid durch Carbochlorierung nach irgendeinem der Ansprüche 1 bis 9, dadurch gekennzeichnet, dass das Chlorierungsmittel das gasförmige Chlor, das $CCl_4$, das $C_2Cl_6$ oder ein Gemisch dieser Mittel ist.

11. Verfahren zur Erzeugung von wasserfreiem Aluminiumchlorid durch Carbochlorierung nach irgendeinem der Ansprüche 1 bis 10, dadurch gekennzeichnet, das das Reduktionsmittel zu der aus Kohlenstoff, Kohlenoxid und Dioxalen gebildeten Gruppe gehört.

12. Verfahren zur Erzeugung von wasserfreiem Aluminiumchlorid durch Carbochlorierung nach irgendeinem der Ansprüche 1 bis 11, dadurch gekennzeichnet, dass die Carbochlorierung unter Druck der Reaktionsgase durchgeführt wird.

13. Verfahren zur Erzeugung von wasserfreiem Aluminiumchlorid durch Carbochlorierung nach irgendeinem der Ansprüche 1 bis 12, dadurch gekennzeichnet dass das Alkali- und/oder Erdalkalihalogenid zu der aus den Lithium-, Natrium-, Kalium-, Kalzium-, Barium- und Magnesiumchloriden gebildeten Gruppe gehört.

14. Verfahren zur Erzeugung von wasserfreiem Aluminiumchlorid durch Carbochlorierung nach irgendeinem der Ansprüche 1 bis 13, dadurch gekennzeichnet, dass die Carbochlorierungstemperatur im Bereich von 450 °C bis 900 °C, aber vorzugsweise zwischen 600 °C und 800 °C liegt.

## Claims

1. A process for the production of anhydrous aluminium chloride by carbochlorination, comprising contacting a source of alumina in the form of agglomerates produced by agglutination and a chlorinating agent in the presence of a reducing agent in a molten salt bath containing at least one alkali metal and/or alkaline-earth metal halide, characterised in that, in order to establish thorough contact between the gaseous, liquid and solid phases, a lining of the bath of molten salts is formed using said agglomerates in which the total volume occupied by the agglomerates of alumina and the molten salt bath is at the most twice the apparent volume occupied by the agglomerates alone for the same section of carbochlorination reactor.

2. A process for the production of anhydrous aluminium chloride by carbochlorination according to Claim 1, characterised in that the total volume occupied by the agglomerates of alumina and the molten salt bath is equal to the apparent volume occupied by the agglomerates alone for the same section of carbochlorination reactor.

3. A process for the production of anhydrous aluminium chloride by carbochlorination according to Claim 1, characterised in that the total volume occupied by the agglomerates of alumina and the molten salt bath is at the most 1.5 times the apparent volume occupied by the agglomerates alone for the same section of carbochlorination reactor.

4. A process for the production of anhydrous aluminium chloride by carabochlorination according to any of Claims 1 to 3, characterised in that the largest particle sizes of the agglomerates of anhydrous alumina are in the range of from 0.2 to 200 mm and preferably in the range of from 0.5 to 8 mm.

5. A process for the production of anhydrous aluminium chloride by carbochlorination according to any of Claims 1 to 4, characterised in that the agglomerates of anhydrous alumina are substantially spherical or cylindrical in shape.

6. A process for the production of anhydrous aluminium chloride by carbochlorination according to any of Claims 1 to 5 characterised in that the source of alumina introduced into the molten salt bath is in the form of bars which disintegrate in the bath and are produced from agglomerates of alumina bound by a coking agent or by means of salts entering into the composition of the carbochlorination bath.

7. A process for the production of anhydrous aluminium chloride by carbochlorination according to any of Claims 1 to 6, characterised in that the agglomerates of alumina are obtained by the mixed agglomeration of powders of alumina and a reducing agent.

8. A process for the production of anhydrous aluminium chloride by carbochlorination according to any of Claims 1 to 7, characterised in that, in addition to alkali metal halide, the molten salt bath contains in the melt from 2 to 60% and preferably from 10 to 50%, based on the molar mass, of anhydrous aluminium chloride.

9. A process for the production of anhydrous aluminium chloride by carbochlorination according to any of Claims 1 to 8, characterised in that the chlorinating agent is introduced into the molten salt bath in a stoichiometric proportion relative to the alumina introduced for carbochlorination.

10. A process for the production of anhydrous aluminium chloride by carbochlorination according to any of Claims 1 to 9, characterised in that the chlorination agent is gaseous chlorine, $CCl_4$, $C_2Cl_6$ or a mixture thereof.

11. A process for the production of anhydrous aluminium chloride by carbochlorination according to any of Claims 1 to 10, characterised in that the reducing agent belongs to the group comprising carbon, carbon monoxide and dioxalene.

12. A process for the production of anhydrous aluminium chloride by carbochlorination according to any of Claims 1 to 11, characterised in that carbochlorination is carried out under the pressure of the reaction gases.

13. A process for the production of anhydrous aluminium chloride by carbochlorination according to any of Claims 1 to 12, characterised in that the alkali metal and/or alkaline-earth metal halide belongs to the group comprising the chlorides of lithium, sodium, potassium, calcium, barium and mangesium.

14. A process for the production of anhydrous aluminium chloride by carbochlorination according to any of Claims 1 to 13, characterised in that the carbochlorination temperature is in the range of from 450 °C to 900 °C and preferably in the range of from 600 °C to 800 °C.